(19) **Europäisches Patentamt / European Patent Office / Office européen des brevets**

(11) **EP 3 778 100 B1**

(12) **EUROPEAN PATENT SPECIFICATION**

(45) Date of publication and mention
of the grant of the patent:
**06.09.2023 Bulletin 2023/36**

(21) Application number: **19785239.5**

(22) Date of filing: **19.03.2019**

(51) International Patent Classification (IPC):
**B23K 26/24** *(2014.01)* **B23K 26/00** *(2014.01)*
**B23K 26/03** *(2006.01)* **B23K 26/04** *(2014.01)*

(52) Cooperative Patent Classification (CPC):
**B23K 26/032; B23K 26/00; B23K 26/043;**
**B23K 26/24;** B23K 2101/18

(86) International application number:
**PCT/JP2019/011473**

(87) International publication number:
**WO 2019/198442 (17.10.2019 Gazette 2019/42)**

(54) **LASER WELDING METHOD, AND LASER WELDING DEVICE**

LASERSCHWEISSVERFAHREN UND LASERSCHWEISSVORRICHTUNG

PROCÉDÉ DE SOUDAGE AU LASER ET DISPOSITIF DE SOUDAGE AU LASER

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **13.04.2018 JP 2018077701**

(43) Date of publication of application:
**17.02.2021 Bulletin 2021/07**

(73) Proprietor: **Panasonic Intellectual Property**
**Management Co., Ltd.**
**Osaka-shi, Osaka 540-6207 (JP)**

(72) Inventors:
• **SAKAI, Toru**
  **Osaka 540-6207 (JP)**
• **SAKURAI, Michio**
  **Osaka 540-6207 (JP)**
• **MISHIMA,Toshiyuki**
  **Osaka 540-6207 (JP)**
• **KUBOTA, Kenta**
  **Osaka 540-6207 (JP)**
• **URATA, Kensuke**
  **Osaka 540-6207 (JP)**

(74) Representative: **Vigand, Philippe et al**
**Novagraaf International SA**
**Chemin de l'Echo 3**
**1213 Onex - Genève (CH)**

(56) References cited:
**WO-A1-2014/132503    WO-A1-2014/132503**
**US-A1- 2016 039 045    US-A1- 2016 039 045**
**US-A1- 2016 356 595    US-A1- 2016 356 595**

Processed by Luminess, 75001 PARIS (FR)

**Description**

TECHNICAL FIELD

The present invention relates to a laser welding method and a laser welding device.

BACKGROUND ART

Laser welding devices are known that evaluate the quality of weld portions by directly measuring the depth of penetration of the weld portions (see Patent Document 1, for example).

The laser welding device disclosed in Patent Document 1 is configured to coaxially align a laser beam with a measurement beam and emit the coaxially aligned beams into a keyhole of a weld portion. The measurement beam is reflected from the bottom of the keyhole and received by an optical interferometer via a beam splitter. Since the optical interferometer can measure the optical path length of the measurement beam, the depth of the keyhole is detected from the measured optical path length and determined to be the depth of penetration of the weld portion. The document US2016039045 (basis for the preambles of claims 1 and 4) discloses methods and systems for characterizing laser machining properties by measuring keyhole dynamics using interferometry, the document US2016356595 discloses a measurement device for a laser processing system and a method for performing position measurements by means of measurement beam on a workpiece, the document WO2014132503 discloses a machining device and a machining method.

CITATION LIST - PATENT DOCUMENTS

Patent Document 1: Japanese Unexamined Patent Publication No. 2012-236196

SUMMARY OF THE INVENTION

TECHNICAL PROBLEM

However, for example, the beam splitter may be warped due to the heat, vibration, a change over time or the like, thus causing misalignment of optical axes of the laser beam and the measurement beam. In such a case, there is a concern that the depth of the keyhole may not be accurately specified.

Specifically, the cross section of the bottom of the keyhole has a curved shape, where the penetration is shallow, on a fore side portion in the welding direction. If the optical axis of the measurement beam deviates forward in the welding direction from the laser beam, the measurement beam will be emitted not to the deepest portion of the keyhole, but to the curved portion where the penetration is shallower than that of the deepest portion of the keyhole. Therefore, there has been a concern that the depth of the keyhole may be measured to be shallower than the actual deepest portion.

In view of the foregoing background, it is an object of the present invention to more accurately measure the penetration depth of a weld portion.

SOLUTION TO THE PROBLEM

The invention provides a laser welding method according to claim 1 and a laser welding device according to claim 4.

Specifically, the laser welding method according to the invention includes: emitting, to the weld portion, the laser beam and a measurement beam coaxially aligned with the laser beam, the measurement beam having a wavelength different from a wavelength of the laser beam; measuring a penetration depth of the weld portion in accordance with the measurement beam reflected on the weld portion during the laser welding; determining an optical axis deviation direction in which an optical axis of the measurement beam deviates from the laser beam, by relatively comparing a plurality of measured values of the penetration depth; and correcting an irradiation position of the measurement beam so that the irradiation position moves into a predetermined area centered at an optical axis of the laser beam.

According to the invention, the optical axis deviation direction is determined by relatively comparing the plurality of values measured. Then, the irradiation position of the measurement beam is moved into a predetermined area centered at the optical axis of the laser beam.

In this manner, the optical axis deviation of the measurement beam from the laser beam is corrected, allowing accurate determination of the penetration depth of the weld portion.

Specifically, when the optical axis of the measurement beam deviates to the fore side in the welding direction of the laser beam, the measurement beam is not emitted to the deepest portion of the keyhole of the weld portion, but emitted to a portion shallower than the deepest portion. Therefore, the depth shallower than the actual deepest portion of the keyhole is measured.

The invention comprises adjusting the irradiation position of the measurement beam during the laser welding so that the irradiation position of the measurement beam moves around a rotation center that moves on a predetermined welding path.

The irradiation position of the measurement beam is adjusted so as to move around a rotation center that moves on a predetermined welding path.

Thus, for example, emitting the laser beam and the measurement beam while rotationally moving the laser beam and the measurement beam allows the laser beam to be applied to a broader range.

In view of this, the direction in which the optical axis of the measurement beam deviates from the laser beam is confirmed, and the irradiation position of the measurement beam is moved into a predetermined area centered at the optical axis of the laser beam, thereby substantially coaxially aligning the measurement beam with the laser beam.

Through this adjustment to make the laser beam and the measurement beam substantially coaxial, it is less likely that a value measured during the laser welding shows a shallower depth than the actual deepest portion of the keyhole.

The expression "into a predetermined area" used herein means "into a circular area having a radius of approximately 20 $\mu$m to 30 $\mu$m and centered at the optical axis of the laser beam."

According to a second embodiment of the invention, in the correcting of the irradiation position of the measurement beam, the irradiation position of the measurement beam is corrected so as to move to a rear side, in a welding direction, of a center of the optical axis of the laser beam.

In the second embodiment, the irradiation position of the measurement beam is moved to the rear side, in the welding direction, of the center of the optical axis of the laser beam.

This configuration makes it less likely that a value measured during the laser welding shows a shallower depth than the actual deepest portion of the keyhole.

According to a third embodiment of the invention, in the correcting of the irradiation position, a parallel plate arranged on an optical path of the measurement beam is rotated to correct the irradiation position of the measurement beam.

In the third embodiment, by rotating the parallel plate, the irradiation position of the measurement beam is corrected in a direction that corrects the deviation in the optical axis of the measurement beam. Further, using a plurality of parallel plates allows position adjustment with a finer resolution, due to a combination of rotations of the plurality of parallel plates, than in a case of using a single parallel plate having the same total plate thickness, although the maximum correction amount is the same.

The laser welding device according to the invention includes: an irradiation unit that emits, to the weld portion, the laser beam and a measurement beam coaxially aligned with the laser beam, the measurement beam having a wavelength different from a wavelength of the laser beam; a measurement unit that measures a penetration depth of the weld portion in accordance with the measurement beam reflected on the weld portion during the laser welding; a determination unit that determines an optical axis deviation direction in which an optical axis of the measurement beam deviates from the laser beam, by relatively comparing a plurality of values measured; and an irradiation position corrector that corrects an irradiation position of the measurement beam so that the irradiation position moves into a predetermined area centered at an optical axis of the laser beam.

The optical axis deviation direction is determined by relatively comparing the plurality of values measured. Then, the irradiation position of the measurement beam is moved into a predetermined area centered at the optical axis of the laser beam.

In this manner, the optical axis deviation of the measurement beam from the laser beam is corrected, allowing accurate determination of the penetration depth of the weld portion.

According to the invention, the irradiation position adjuster that adjusts the irradiation position of the measurement beam during the laser welding so that the irradiation position of the measurement beam moves around a rotation center that moves on a predetermined welding path.

The irradiation position of the measurement beam is adjusted so as to move around a rotation center that moves on a predetermined welding path.

Thus, for example, emitting the laser beam and the measurement beam while rotationally moving the laser beam and the measurement beam allows the laser beam to be applied to a broader range.

ADVANTAGES OF THE INVENTION

The above aspects of the present invention enable accurate measurement of the penetration depth of a weld portion.

BRIEF DESCRIPTION OF THE DRAWINGS

FIG. 1 is a schematic view of a laser welding device in accordance with a first embodiment of the invention.

FIG. 2 is a schematic view illustrating a configuration of a laser emitting head.

FIG. 3 is a side cross-sectional view illustrating a positional relation among the laser beam, the measurement beam, and a keyhole.

FIG. 4 is a side cross-sectional view illustrating a positional relation among the laser beam, the measurement beam, and a keyhole, when a deviation of an optical axis of the measurement beam occurs.

FIG. 5 is a graph comparing a penetration depth measured when the deviation in the optical axis does not occur, with a penetration depth measured when the deviation in the optical axis occurs.

FIG. 6 is a diagram illustrating steps for specifying a direction in which the optical axis of the measurement beam deviates from the laser beam.

FIG. 7 is a graph illustrating a relation between positions of the laser beam and the measurement beam when these beams are moved along a circular trajectory, and a penetration depth measured in each of the positions.

FIG. 8A is a diagram illustrating a position change amount of the laser beam having passed through an optical member.

FIG. 8B is a diagram illustrating a position change amount of the measurement beam having passed through the optical member.

FIG. 8C is a diagram illustrating a difference between the position change amount of the laser beam and that of the measurement beam.

FIG. 9 is a diagram illustrating a state in which the deviation in the optical axis has been corrected by using two parallel plates.

FIG. 10 is a diagram illustrating a state in which the deviation in the optical axis of the measurement beam from the laser beam has been corrected.

FIG. 11 is a diagram illustrating a state in which the measurement beam is moved into a predetermined area centered at the optical axis of the laser beam.

FIG. 12 is a diagram illustrating a state in which the measurement beam is moved to a rear side, in the welding direction, of the center of the optical axis of the laser beam.

FIG. 13 is a flowchart illustrating a process of measuring the penetration depth of a weld portion.

FIG. 14 is a schematic view illustrating a configuration of a laser emitting head according to a second embodiment.

FIG. 15 is a side cross-sectional view of the weld portion, when the laser beam is emitted to the welding target along a spin trajectory.

## DESCRIPTION OF EMBODIMENTS

Embodiments of the present invention will be described in detail with reference to the drawings. Note that the following description of embodiments is merely an example in nature, and is not intended to limit the scope, applications, or use of the present invention as defined in the attached claims.

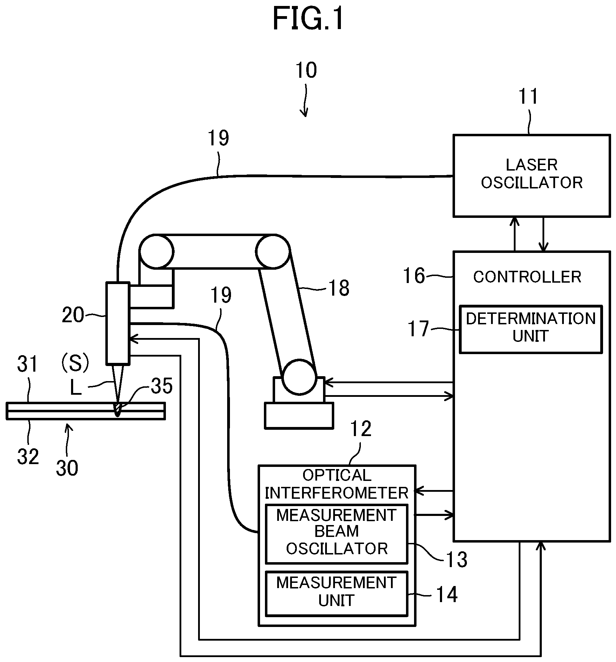

As illustrated in FIG. 1, a laser welding device 10 includes a laser oscillator 11 configured to output a laser beam L, an optical interferometer 12 configured to output a measurement beam S, a laser emitting head 20 (irradiation unit) configured to emit the laser beam L and the measurement beam S to a welding target 30, a robot 18 to which the laser emitting head 20 is attached and which is configured to carry the laser emitting head 20, and a controller 16 configured to control the operations of the laser emitting head 20 and the robot 18 to perform laser welding.

The laser oscillator 11 outputs the laser beam L based on an instruction from the controller 16. The laser oscillator 11 and the laser emitting head 20 are connected via an optical fiber 19. The laser beam L is transmitted from the laser oscillator 11 to the laser emitting head 20 through the optical fiber 19.

The optical interferometer 12 includes a measurement beam oscillator 13 configured to output the measurement beam S having a wavelength different from the wavelength of the laser beam L and a measurement unit 14 configured to measure the depth of penetration of a weld portion 35 to be described later. The measurement beam oscillator 13 outputs the measurement beam S based on an instruction from the controller 16. The optical interferometer 12 and the laser emitting head 20 are connected via an optical fiber 19. The measurement beam S is transmitted from the optical interferometer 12 to the laser emitting head 20 via the optical fiber 19.

The laser emitting head 20 is attached to a distal end of an arm of the robot 18. The laser emitting head 20 focuses the laser beam L and the measurement beam S on the welding target 30 based on an instruction from the controller 16.

The robot 18 moves the laser emitting head 20 based on an instruction from the controller 16 to a position as instructed, at which the laser beam L and the measurement beam S are emitted for scanning.

The controller 16 is connected to the laser oscillator 11, the optical interferometer 12, and the robot 18. The controller 16 has a function of controlling the travel speed of the laser emitting head 20 and has functions of controlling when to start or stop the output of the laser beam L and controlling an output intensity of the laser beam L. As will be described in detail later, the controller 16 has a determination unit 17 that determines the penetration depth of the weld portion 35 in accordance with a plurality of measured values obtained by the measurement unit 14.

The welding target 30 includes an upper metal plate 31 and a lower metal plate 32 that are overlapping in the vertical direction. The laser welding device 10 welds the upper metal plate 31 and the lower metal plate 32 by emitting the laser beam L to the upper surface of the upper metal plate 31.

The laser welding device 10 according to the present embodiment can measure the depth of penetration of the weld portion 35 while performing laser welding.

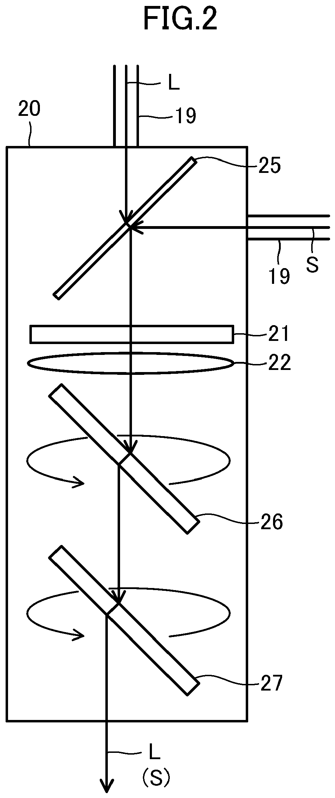

Specifically, as shown in FIG. 2, the laser emitting head 20 includes a beam splitter 25 that combines the laser beam L and the measurement beam S into a coaxial light beam, a collimating lens 21 and a focus lens 22 through which the laser beam L and the measurement beam S are transmitted, a first parallel plate 26, and a second parallel plate 27.

The beam splitter 25 is a dichroic mirror configured to transmit or reflect a beam having a predetermined wavelength and is configured to transmit the laser beam L from the laser oscillator 11 and reflect the measurement beam S from the optical interferometer 12.

In one preferred embodiment, the difference between the wavelength of the laser beam L and the wavelength of the measurement beam S is 100 nm or more to sufficiently separate the laser beam L from the measurement beam S with the beam splitter 25. In this embodiment, the spot diameter of the laser beam L is set to 700 $\mu$m to 800 $\mu$m, and the spot diameter of the measurement beam S is set to 100 $\mu$m.

The first parallel plate 26 and the second parallel plate 27 are connected to a motor (not shown), and are rotated in accordance with an instruction from the controller 16.

The laser beam L output from the laser oscillator 11 passes through the optical fiber 19 to the laser emitting head 20. The laser beam L enters the laser emitting head 20 and passes through the beam splitter 25.

Meanwhile, the measurement beam S output from the optical interferometer 12 passes through the optical fiber 19 to the laser emitting head 20. The measurement beam S that has entered the laser emitting head 20 is concentrically and coaxially aligned with the laser beam L by the beam splitter 25. The coaxially aligned laser beam L and measurement beam S are collimated by the collimating lens 21 and focused by the focus lens 22.

The laser beam L and the measurement beam S focused by the focus lens 22 pass through the first parallel plate 26 and the second parallel plate 27 controlled by the controller 16, at which the irradiation position (focal length) of the laser beam L and the measurement beam S is determined, and the laser beam L and the measurement beam S are emitted to the weld portion 35 of the welding target 30.

In this case, in the laser emitting head 20, the first parallel plate 26 and the second parallel plate 27 are rotated to rotate the laser beam L and the measurement beam S along circular trajectories, whereby the laser beam L and the measurement beam S can be rotationally moved. That is, the first parallel plate 26 and the second parallel plate 27 serve as an irradiation position corrector that is capable of changing the irradiation positions of the laser beam L and the measurement beam S.

Since the robot 18 moves the laser emitting head 20, the irradiation position of the laser beam L and the measurement beam S can be moved in a welding region on the welding target 30.

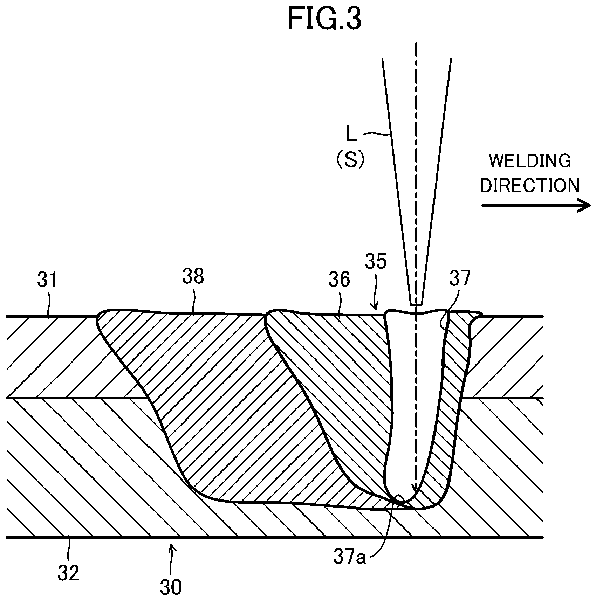

As illustrated in FIG. 3, in welding the weld portion 35 of the welding target 30 including the upper metal plate 31 and the lower metal plate 32, the laser welding device 10 emits the laser beam L to the upper surface of the upper metal plate 31 from above the welding target 30.

The weld portion 35 irradiated with the laser beam L is melted from an upper portion, and a weld puddle 36 is formed in the weld portion 35. When the weld portion 35 is melted, molten metal in the weld puddle 36 vaporizes and the vaporizing metal generates vapor pressure to form a keyhole 37. In this example, the weld portion 35 includes both weld puddle 36 and keyhole 37. A solidified portion 38 is formed behind the weld puddle 36 in the welding direction when the weld puddle 36 is solidified.

The measurement beam S output from the optical interferometer 12 is concentrically and coaxially aligned, by the beam splitter 25, with the laser beam L output from the laser oscillator 11, and then emitted into the keyhole 37. The emitted measurement beam S is reflected from a bottom 37a of the keyhole 37 and enters the optical interferometer 12 via the beam splitter 25.

The optical path length of the measurement beam S entering the optical interferometer 12 is measured by the measurement unit 14. The measurement unit 14 determines the depth of the keyhole 37 from the optical path length measured, as the penetration depth of the weld portion 35. The laser welding device 10 determines the quality of the weld portion 35 based on the determined depth of penetration.

With the above-described configuration, the laser welding device 10 can measure the depth of penetration while performing the laser welding.

However, for example, the beam splitter 25 may be warped due to the heat, vibration, a change over time or the like, thus causing misalignment of optical axes of the laser beam L and the measurement beam S. When such a misalignment of optical axes of the laser beam L and the measurement beam S occurs, the optical interferometer 12 may determine the depth of the keyhole 37 to be shallower than the actual depth and may fail to accurately measure the penetration depth.

Specifically, the keyhole 37 is formed by a vapor pressure generated when the metal in the weld portion 35 melts and evaporates. The shape of the formed keyhole 37 varies depending on the period of irradiation with the laser beam L and the state of the weld puddle 36.

The faster the moving speed (welding speed) of the laser emitting head 20 becomes, the more rearward the interior wall of the keyhole 37 on the fore side in the welding direction tends to curve. Therefore, in one preferred embodiment, the laser welding speed is suitably set to reduce the curvature of the curved portion of the bottom 37a of the keyhole 37.

However, despite a suitable setting of the laser welding speed, it is difficult to make the opening diameter of the keyhole 37 and the hole diameter of the bottom 37a substantially equal to each other, and the interior wall of the keyhole 37 on the fore side in the welding direction may have a curved portion where the penetration is shallow.

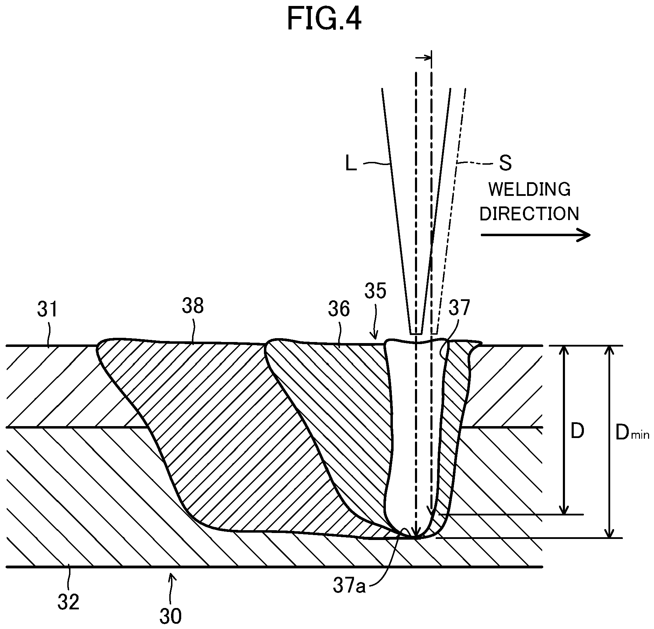

Thus, if the optical axis of the measurement beam S deviates forward in the welding direction from the laser beam L, as indicated by imaginary lines in FIG. 4, the position of the bottom 37a of the keyhole 37 and the center position of the spot of the measurement beam S do not coincide with each other, which may result in that the measurement beam S is not emitted to the bottom 37a.

In a state where the measurement beam S is not emitted to the bottom 37a (e.g., in a state where the optical axis of the measurement beam S deviates forward in the welding direction from the laser beam L, and the measurement beam S is emitted to the fore side interior wall of the keyhole 37), the optical interferometer 12 measures, as the position of the bottom 37a, the position where the measurement beam S is reflected and determines the measured depth as the depth of the keyhole 37.

That is, if the measurement beam S is not emitted to the bottom 37a, the optical interferometer 12 determines the depth of the keyhole 37 to be shallower than the actual depth. In the example shown in FIG. 4, the depth D that is shallower than the actual depth Dmin of the keyhole 37 is measured. The weld portion 35 cannot be accurately inspected if the depth of the keyhole 37 is determined to be shallower than the actual depth.

The following describes how the penetration depth of the weld portion 35 varies, i.e., how the measured depth of the keyhole 37 varies, between the states where there is misalignment of the optical axes and there is not.

In the example shown in FIG. 4, the thickness of the upper metal plate 31 is 1 mm; the thickness of the lower metal plate 32 is 4.3 mm; and the optical axis of the measurement beam S is deviated 100 $\mu$m forward in the welding direction from the optical axis of the laser beam L.

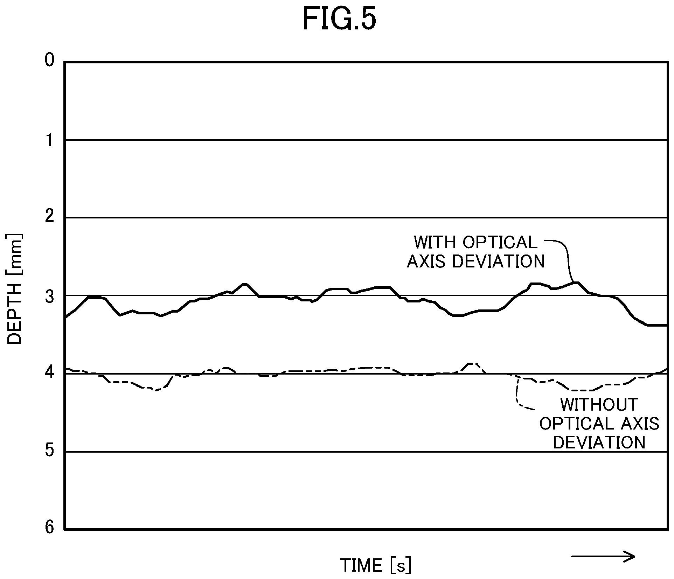

FIG. 5 is a graph illustrating the resulting depth of the keyhole 37, which is the penetration depth of the weld portion 35 from the surface of the welding target 30 or from an imaginary surface serving as the reference. As illustrated in FIG. 5, when the penetration depth is measured while the irradiation positions are moved in a direction in which the optical axis of the measurement beam S deviates, the measured values of the depth of the keyhole 37 are around 3 mm. On the other hand, when the optical axes are not misaligned, the measured values of the depth of the keyhole 37 are around 4 mm.

Note that the measured values become small (shallow) when the optical axis of the measurement beam S deviates forward in the welding direction from the laser beam L. Therefore, when the optical axis of the measurement beam S deviates rearward, or to the right or left in relation to the welding direction from the laser beam L, then the measured values of the depth of the keyhole 37 will be around 4 mm.

<Method of Determining Optical Axis Deviation Direction>

In view of this, in the present embodiment, to confirm in which direction the optical axis of the measurement beam S deviates from the laser beam L, laser welding is performed while moving the irradiation positions of the laser beam L and the measurement beam S along a circular trajectory at the time, for example, of starting the laser welding device 10.

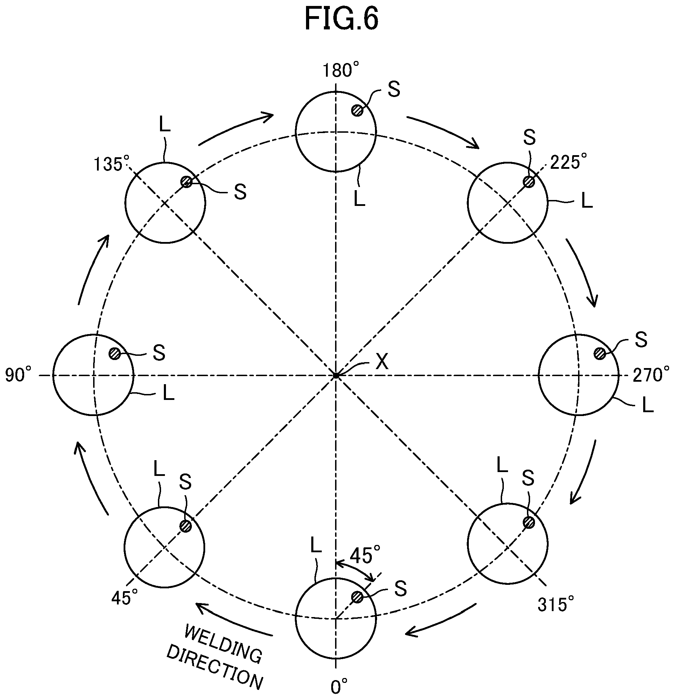

As illustrated in FIG. 6, the laser welding device 10 performs laser welding on the welding target 30 along a circular welding path formed by a center line as illustrated in FIG. 6. For example, suppose that the bottom position in the circular welding path of FIG. 6 is the 0° position that is the base point serving as the start position, and that the laser welding is performed while the laser emitting head 20 itself is moved clockwise along a circular trajectory that is the welding direction, about the point X in FIG. 6 as the center of the circle having a certain radius (e.g., 50 mm to 70 mm). Suppose also that, in the example of FIG. 6, the optical axis of the measurement beam S deviates obliquely forward at an angle of 45° rightward from the laser beam L.

First, laser welding is performed while the irradiation positions of the laser beam L and the measurement beam S are moved clockwise along the circular welding path. The penetration depth of the weld portion 35 is measured from the start at the 0° position that is the base point until the laser emitting head 20 returns to the 0° position again.

Then, the determination unit 17 determines an optical axis deviation direction of the measurement beam S by relatively comparing a plurality of values measured during the laser welding.

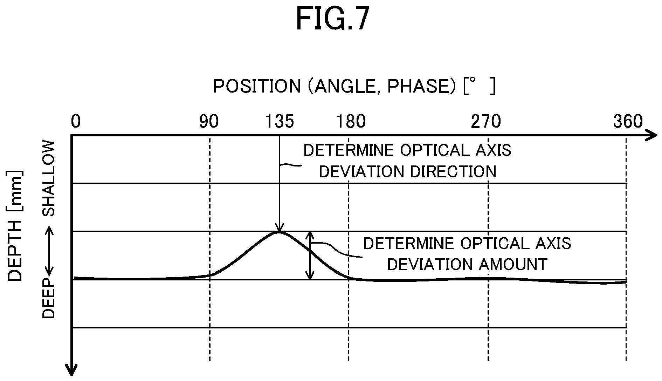

Specifically, while the laser beam L and the measurement beam S move from the 0° position toward the 90° position of the circular welding path, the irradiation position of the measurement beam S is on the rear side of the optical axis of the laser beam L in the welding direction. Therefore, the penetration depth of the weld portion 35 is substantially constant within the segment ranging from the 0° position to the 90° position of the welding path, as shown in FIG. 7.

Next, while the laser beam L and the measurement beam S move from the 90° position toward the 180° position of the welding path, the irradiation position of the measurement beam S is on the fore side of the optical axis of the laser beam L in the welding direction. Therefore, values of the penetration depth of the weld portion 35 measured in the segment ranging from the 90° position to the 180° position are smaller than values of the penetration depth measured within the segment ranging from the 0° position to the 90° position of the welding path, as shown in FIG. 7.

Further, while the laser beam L and the measurement beam S move from the 180° position to the 270° position, and from the 270° position to the 360° position (0° position) of the welding path, the irradiation position of the measurement beam S is on the rear side of the optical axis of the laser beam L in the welding direction. Therefore, the penetration depth of the weld portion 35 is substantially constant within the segment ranging from the 0° position to the 90° position of the welding path, as shown in FIG. 7.

In the graph of FIG. 7, the smallest value is measured when the laser beam L and the measurement beam S move around the 135° position of the welding path. From this, it is understood that the optical axis of the measurement beam S deviates forward in the welding direction, that is, obliquely forward at an angle of 45° rightward, from the optical axis of the laser beam L, when the laser beam L and the measurement beam S pass by the 135° position of the welding path.

Thus, even if the deviation direction of the optical axis of the measurement beam S from the laser beam L is unknown at a time of, for example, starting the laser welding device 10, it is possible to determine in which direction the optical axis of the measurement beam S relatively deviates from the laser beam L through the relative comparison of the plurality of values measured.

<Method for Correcting Misalignment of Optical Axes>

After determining the optical axis deviation direction, the optical axis of the measurement beam S is corrected to be substantially coaxial with the optical axis of the laser beam L before laser welding is actually started.

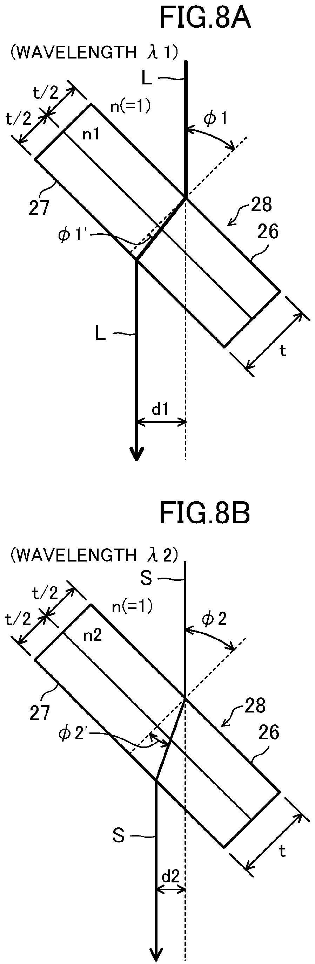

The following describes a method for correcting deviation in the optical axis of the measurement beam S, with reference to FIG. 8A to FIG. 8C. As shown in FIG. 8A and FIG. 8B, the wavelength of the laser beam L is different from that of the measurement beam S. In the present embodiment, the wavelength $\lambda 1$ of the laser beam L is 975 nm, and the wavelength $\lambda 2$ of the measurement beam S is 1300 nm.

For the sake of easier explanation, in the following description, the first parallel plate 26 and the second parallel plate 27, each having a thickness of $t/2$, are placed on each other to form, by calculation, a member having a total plate thickness t, which is the total thickness of the parallel plates through which the laser beam L and the measurement beam S pass. This member will be referred to as an optical member 28. In this case, the total of the thickness of the first parallel plate 26 and the thickness of the second parallel plate 27 is the total plate thickness t, and a maximum correction amount is determined based on the total plate thickness of the parallel plates.

When the laser beam L and the measurement beam S pass the optical member 28, refraction angles $\varphi 1'$ and $\varphi 2'$ are generated due to a difference between a refractive index n (=1) of the air and refractive indices n1 and n2 of the optical member 28. Position change amounts d1 and d2 change in accordance with these refraction angles $\varphi 1'$ and $\varphi 2'$.

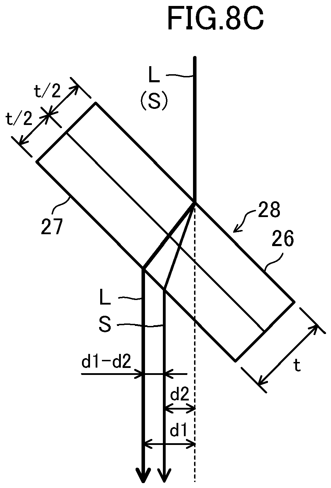

Since the refractive indices n1 and n2 depend on the wavelength of the light, the refraction angles $\varphi 1'$ and $\varphi 2'$ change in accordance with the difference in the wavelengths of the laser beam L and the measurement beam S. Thus, an optical axis deviation d1-d2 of the measurement beam S from the laser beam L occurs as shown in FIG. 8C.

The following describes how the optical axis deviations d1 and d2 are obtained. When the wavelength $\lambda 1$ of the laser beam L is 975 nm, the refractive index n1 of the optical member 28 is 1.451, as shown in FIG. 8A. The refractive index n1 differs depending on the material of the optical member 28. In the present embodiment, the refractive index of, for example, a synthetic quartz is used for calculation. Further, the incident angle $\varphi 1$ of the laser beam L on the optical member 28 is 45°. Further, the thickness t of the optical member 28, which is the calculated total plate thickness t, is set to be 40 mm.

From the Snell's law, the following formula (1) is obtained.

$$ n \cdot \sin \varphi 1 = n1 \cdot \sin \varphi 1' \; ... \; (1) $$

From the formula (1), the refraction angle $\varphi 1' = 29.1648[°]$ is obtained.

Further, the position change amount d1 can be obtained from the following formula (2).

$$ d1 = t \cdot \sin \varphi 1 \cdot (1 - \cos \varphi 1 / (n1 \cdot \cos \varphi 1')) \; ... \; (2) $$

Then, the position change amount d1 = 12.4995 [mm] is obtained based on the refraction angle $\varphi 1'$ obtained from the formula (1) and on the formula (2).

When the wavelength $\lambda 2$ of the measurement beam S is 1300 nm, the refractive index n2 of the optical member 28 is 1.447, as shown in FIG. 8B. The refractive index n2 differs depending on the material of the optical member 28. In the present embodiment, the refractive index of, for example, a synthetic quartz is used for calculation. Further, the incident angle $\varphi 2$ of the laser beam L to the optical member 28 is set to 45 °. Further, the thickness t of the optical member 28, which is the calculated total plate thickness t, is set to be 40 mm.

From the Snell's law, the following formula (3) is obtained.

$$ n \cdot \sin \varphi 2 = n2 \cdot \sin \varphi 2' \; ... \; (3) $$

From the formula (3), the refraction angle $\varphi 2' = 29.2533$ [°] is obtained.

Further, the position change amount d2 can be obtained from the following formula (4).

$$ d2 = t \cdot \sin \varphi 2 \cdot (1 - \cos \varphi 2 / (n2 \cdot \cos \varphi 2')) \; ... \; (4) $$

Then, the position change amount d2 = 12.4422 [mm] is obtained based on the refraction angle $\varphi 2'$ obtained from the formula (3) and on the formula (4).

Next, the deviation in the optical axis as calculated above occurs when the laser beam L and the measurement beam S coaxially aligned with each other pass through the optical member 28, as shown in FIG. 8C. The optical axis deviation d1-d2 at this moment is 57.3 $\mu$m.

As described, the difference between the wavelengths of the laser beam L and the measurement beam S causes a deviation of 57.3 $\mu$m in the optical axis when the beams pass the optical member 28. Thus, the present embodiment intentionally utilizes this position change amount caused by the optical member 28 so as to correct the optical axis deviation direction determined.

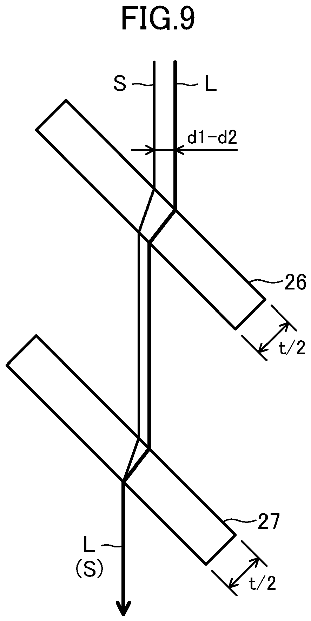

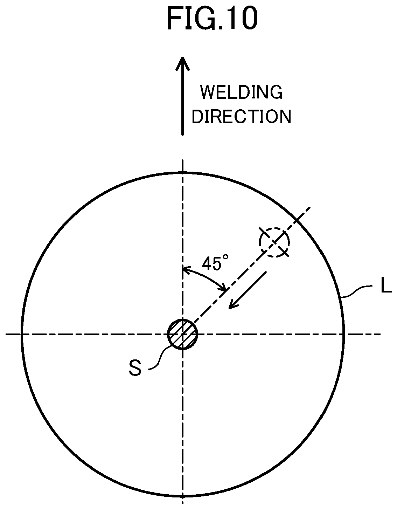

Specifically, as illustrated in FIG. 9, the first parallel plate 26 and the second parallel plate 27 are rotated, so that the optical axis deviation occurs, due to the difference in the wavelengths, in a direction opposite to the optical axis deviation direction determined. As a result, as is also illustrated in FIG. 10, the irradiation position of the measurement beam S moves toward the optical axis center of the laser beam L, and the correction is made so that the laser beam L and the measurement beam S become substantially coaxial.

In this manner, the optical axis deviation of the measurement beam S from the laser beam L is corrected, allowing accurate determination of the penetration depth of the weld portion 35.

In the example illustrated in FIG. 10, the optical axis of the measurement beam S is corrected so as to be substantially coaxial with the optical axis of the laser beam L as a non-limiting example.

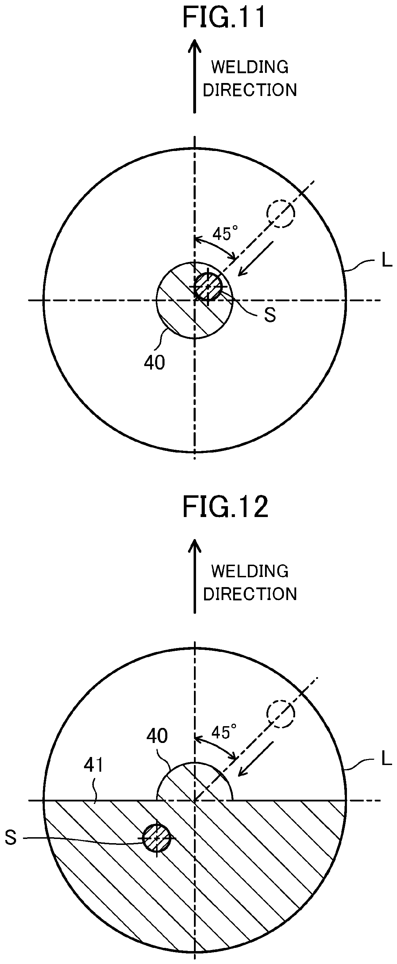

For example, as illustrated in FIG. 11, the optical axis of the measurement beam S as the irradiation position of the measurement beam S may be corrected so as to move into a predetermined area 40 centered at the optical axis of the laser beam L (the hatched area in FIG. 11). In the example of FIG. 11, the hatched area 40 is exaggerated and drawn relatively larger than the spot diameter of the measurement beam S. However, the area 40 is actually a circular area of approximately 20 $\mu$m to 30 $\mu$m in radius, whereas the spot diameter of the measurement beam S is 100 $\mu$m.

It is therefore possible to reduce variations in the measured values even if the optical axis of the measurement beam S slightly deviates from the optical axis of the laser beam L, as long as the optical axis of the measurement beam S is in the predetermined area 40.

Further, for example, as illustrated in FIG. 12, the irradiation position of the measurement beam S may be corrected so as to move to an area 41, within the spot diameter of the laser beam L, on the rear side of the center of the optical axis of the laser beam L in the welding direction. That is, since a value smaller than the actual value is measured only when the measurement beam S is in a position on the fore side of the laser beam L in the welding direction, variations in the measured values can be reduced by positioning the measurement beam S in the area 41 on the rear side in the welding direction.

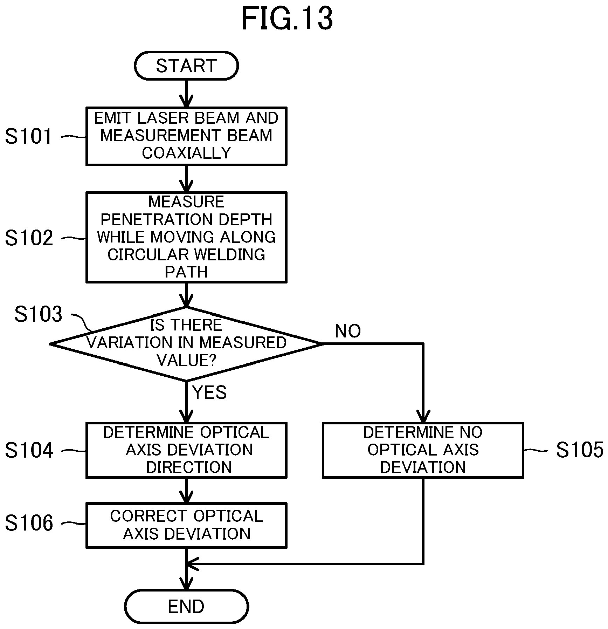

The following describes a process of measuring the penetration depth of the weld portion 35 with reference to the flowchart of FIG. 13. As illustrated in FIG. 13, at Step S101, the laser beam L and the measurement beam S are coaxially aligned with each other in the laser emitting head 20, and the laser emitting head 20 emits the coaxially aligned beams to the weld portion 35. The process proceeds to Step S102.

At step S102, the penetration depth of the weld portion 35 is measured in accordance with the measurement beam S reflected on the weld portion 35, while moving the irradiation positions of the laser beam L and the measurement beam S along the circular welding path. Then, the process proceeds to step S103.

In step S103, the determination unit 17 relatively compares a plurality of values measured through the measurement performed along the circular welding path, thereby determining whether there are variations in the measured values. If it is YES at step S103, the process proceeds to step S104. If it is No at step S103, the process proceeds to step S105.

In step S104, the optical axis deviation direction, in which the optical axis of the measurement beam S deviates from the laser beam L, is determined based on the direction in which a value smallest among the plurality of measured values is measured. Then, the process proceeds to step S 106.

At step S105, it is determined that there is no deviation in the optical axis, and the process is ended.

At step S106, the deviation in the optical axis is corrected by rotating the first parallel plate 26 and the second parallel plate 27 to cause the optical axis to deviate, due to a difference between the wavelengths of the laser beam L and the measurement beam S, in a direction opposite to the optical axis deviation direction determined. Then, the process is ended.

In this manner, even if the optical axis of the measurement beam S deviates from the laser beam L, the deviation is corrected by the first parallel plate 26 and the second parallel plate 27, allowing accurate determination of the penetration depth of the weld portion 35.

«Second Embodiment»

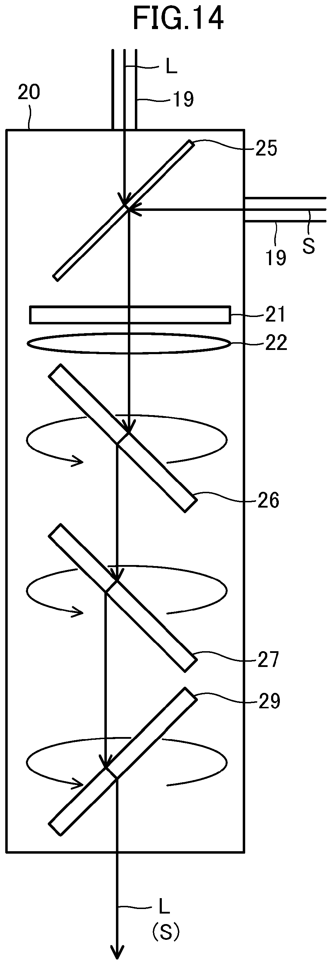

FIG. 14 is a schematic view illustrating a configuration of a laser emitting head according to a second embodiment. In the following description, the same reference characters designate the same components as those of the first embodiment, and the description is focused only on the difference between this embodiment and the first embodiment.

As illustrated in FIG. 14, a laser emitting head 20 includes a beam splitter 25 that combines the laser beam L and the measurement beam S into a coaxial light beam, a collimating lens 21 and a focus lens 22 through which the laser beam L and the measurement beam S are transmitted, a first parallel plate 26, a second parallel plate 27, and a third parallel plate 29.

The first parallel plate 26 and the second parallel plate 27 rotate to cause the laser beam L and the measurement beam S to rotationally move along a circular trajectory (spin trajectory). That is, the first parallel plate 26 and the second parallel plate 27 serve as an irradiation position adjuster that is capable of changing the irradiation positions of the laser beam L and the measurement beam S.

Note that, by adjusting the rotation of the first parallel plate 26 and the second parallel plate 27, it is possible to perform laser welding along trajectories of various shapes such as a circular shape, an elliptical shape, and a rectangular shape, in addition to the spin trajectory.

The third parallel plate 29 is used for correcting deviation in the optical axis of the measurement beam S from the laser beam L as described in the first embodiment.

The laser welding device 10 welds the welding target 30 by emitting the laser beam L and the measurement beam S to the welding target 30 along a spin trajectory in which the beam spot is relatively moved in the welding direction while the laser beam L and the measurement beam S are emitted in a spinning manner. At this time, the third parallel plate 29 is rotated to correct the deviation in the optical axis of the measurement beam S from the laser beam L.

The spin trajectory is a path of the laser beam L and the measurement beam S in which the spot of the laser beam L and the measurement beam S being emitted is moved in the welding direction while being rotated along a circular trajectory. In other words, the spin trajectory is a rotating path of the laser beam L and the measurement beam S that relatively linearly travels in the welding direction.

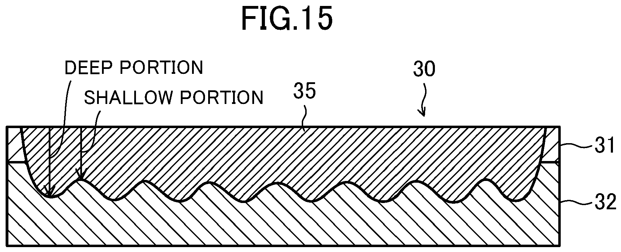

The penetration depth of the weld portion 35 fluctuates as illustrated in FIG. 15, when the spin diameter of the spin trajectory of the laser beam L is large (e.g., φ0.3 mm or more), resulting in the bottom of the weld portion 35 having a wavy cross section with a large amplitude.

Specifically, a heat input area is small if a spin diameter of the spin trajectory of the laser beam L is small, and thus there is only a small difference between a portion of the weld portion 35 having a deep penetration depth and a portion of the weld portion 35 having a shallow penetration depth. The bottom of the weld portion 35 therefore has a wavy cross section with a small amplitude.

On the other hand, a heat input area broadens with an increase in the spin diameter of the spin trajectory of the laser beam L, and the penetration depth of the weld portion 35 tends to be shallow overall. Further, the broader the heat input area becomes, the broader a high heat input area and a low heat input area become, which broadens a portion of the weld portion 35 having a deep penetration depth and a portion of the weld portion 35 having a shallow penetration depth. In the portion having a shallow penetration depth, the welding strength may be insufficient. Therefore, the penetration depth needs to be accurately measured.

Here, the second embodiment uses the first parallel plate 26 and the second parallel plate 27 to emit the laser beam L along the spin trajectory, and uses the third parallel plate 29 to correct the deviation in the optical axis of the measurement beam S from the laser beam L.

In this manner, by thoroughly eliminating or reducing the deviation in the optical axis of the measurement beam S from the laser beam L, it is possible to measure the penetration depth of the weld portion 35 through the entire area of the spin trajectory of the laser beam L without a deviation in the optical axis of the measurement beam S from the laser beam L.

Accordingly, both of a portion of the weld portion 35 having a deep penetration depth and a portion of the weld portion 35 having a shallow penetration depth can be accurately measured.

«Other Embodiments»

The embodiments described above may be modified as follows.

In the above embodiments, laser welding is performed while moving the irradiation positions of the laser beam L and the measurement beam S along a circular welding path so as to determine the optical axis deviation direction. However, this is a non-limiting example. For example, the irradiation positions may be moved along a welding path of a rectangular shape or other polygonal shapes. Further, the moving direction of the irradiation positions of the laser beam L and the measurement beam S may be clockwise or counterclockwise.

In the above embodiments, the irradiation positions of the laser beam L and the measurement beam S are moved by using the laser emitting head 20 adopting an optical member, such as parallel plates, and the robot 18. However, an optical device such as a Galvano scanner for a scan with the laser beam L may be used as long as the laser irradiation position can be changed along a spinning trajectory.

In the above embodiments, the direction in which the smallest value among the plurality of values is measured is determined to be the optical axis deviation direction. However, this is a non-limiting example. For example, the plurality of measured values may be compared with a predetermined reference value, and a direction in which a value smaller than the reference value is measured may be determined to be the optical axis deviation direction.

In the above embodiments, two parallel plates, i.e., the first parallel plate 26 and the second parallel plate 27, are used to move the irradiation positions of the laser beam L and the measurement beam S. However, for example, instead of using a plurality of parallel plates in combination, the irradiation positions of the laser beam L and the measurement beam S may be moved by using a single parallel plate whose thickness equals to the calculated total plate thickness of the plurality of parallel plates.

In the above second embodiment, the first parallel plate 26 and the second parallel plate 27 are used for a spin trajectory, and a third parallel plate 29 is used for correction of the deviation in the optical axis. However, all of these three plates, i.e., the first parallel plate 26, the second parallel plate 27, and the third parallel plate 29, may be used for correction of the deviation in the optical axis, which allows position adjustment with a finer resolution, due to a combination of rotations of three or more parallel plates, than in a case of using one parallel plate or two parallel plates having the same total plate thickness, although the maximum correction amount is the same.

In the second embodiment, the third parallel plate 29 is coaxially aligned with the first parallel plate 26 and the second parallel plate 27. However, the position of the third parallel plate 29 may be any given position as long as it is on the optical path of the measurement beam S. For example, the third parallel plate 29 may be arranged before the beam splitter 25, that is, between the beam splitter 25 and the optical interferometer 12.

INDUSTRIAL APPLICABILITY

As can be seen from the foregoing description, the present invention allows accurate measurement of the penetration depth of a weld portion, which is very practical and useful and therefore highly applicable in the industry.

DESCRIPTION OF REFERENCE CHARACTERS

10     Laser Welding Device
14     Measurement Unit
17     Determination Unit
20     Laser Emitting Head (Irradiation Unit)
26     First Parallel Plate (Irradiation Position Corrector, Irradiation Position Adjuster)
27     Second Parallel Plate (Irradiation Position Corrector, Irradiation Position Adjuster)
29     Third Parallel Plate (Irradiation Position Corrector)
35     Weld Portion
40     Area
41     Area
L     Laser Beam
S     Measurement Beam

**Claims**

1. A laser welding method for welding a weld portion (35) by using a laser beam (L), the method comprising:

   emitting, to the weld portion (35), the laser beam (L) and a measurement beam (S) coaxially aligned with the laser beam (L), the measurement beam (S) having a wavelength different from a wavelength of the laser beam (L);
   measuring a penetration depth of the weld portion (35) in accordance with the measurement beam (S) reflected on the weld portion (35) during the laser welding;
   **characterized in** a correction of an irradiation position of the measurement beam (S) so that the irradiation position moves into a predetermined area centred at an optical axis of the laser beam (L),
   by adjusting the irradiation position of the measurement beam (S) during the laser welding so that the irradiation position of the measurement beam (S) moves around a rotation centre that moves on a predetermined welding path; and
   determining an optical axis deviation direction in which an optical axis of the measurement beam (S) deviates from the laser beam (L), by relatively comparing a plurality of measured values of the penetration depth.

2. The laser welding method of claim 1, wherein in the correcting of the irradiation position of the measurement beam (S), the irradiation position of the measurement beam (S) is corrected so as to move to a rear side, in a welding direction, of a center of the optical axis of the laser beam (L).

3. The laser welding method of claim 1 or 2, wherein in the correcting of the irradiation position, a parallel plate arranged on an optical path of the measurement beam (S) is rotated to correct the irradiation position of the measurement beam (S).

4. A laser welding device (10) for welding a weld portion (35) by using a laser beam (L), the laser welding device (10) comprising:

   an irradiation unit (20) that emits, to the weld portion (35), the laser beam (L) and a measurement beam (S) coaxially aligned with the laser beam (L), the measurement beam (S) having a wavelength different from a wavelength of the laser beam (L);
   a measurement unit (14) that measures a penetration depth of the weld portion (35) in accordance with the measurement beam (S) reflected on the weld portion (35) during the laser welding;
   **characterized in**
   a determination unit (17) that determines an optical axis deviation direction in which an optical axis of the measurement beam (S) deviates from the laser beam (L), by relatively comparing a plurality of measured values of the penetration depth;
   an irradiation position corrector that corrects an irradiation position of the measurement beam (S) so that the irradiation position moves into a predetermined area centered at an optical axis of the laser beam (L), and
   an irradiation position adjuster that adjusts the irradiation position of the measurement beam (S) during the laser welding so that the irradiation position of the measurement beam (S) moves around a rotation center that moves on a predetermined welding path.

## Patentansprüche

1. Laserschweißverfahren zum Schweißen einer Schweißportion (35) durch Verwenden eines Laserstrahls (L), wobei das Verfahren umfasst:

   Abstrahlen des Laserstrahls (L) und eines Messstrahls (S), der koxial auf den Laserstrahl (L) ausgerichtet ist, auf die Schweißportion (35), wobei der Messstrahl (S) eine Wellenlänge aufweist, die sich von einer Wellenlänge des Laserstrahls (L) unterscheidet;
   Messen einer Eindringtiefe der Schweißportion (35) gemäß dem Messstrahl (S), der auf der Schweißportion (35) während des Laserschweißens reflektiert wird;
   **gekennzeichnet durch** eine Korrektur einer Bestrahlungsposition des Messstrahls (S), so dass die Bestrahlungsposition sich in einen vorbestimmten Bereich bewegt, der an einer optischen Achse des Laserstrahls (L) zentriert ist, durch Justieren der Bestrahlungsposition des Messstrahls (S) während des Laserschweißens, so dass die Bestrahlungsposition des Messstrahls (S) sich um ein Drehzentrum bewegt, das sich auf einem vorbestimmten Schweißweg bewegt; und
   Bestimmen einer Richtung einer Abweichung einer optischen Achse, in der eine optische Achse des Messstrahls (S) von dem Laserstrahl (L) abweicht, durch relatives Vergleichen von mehreren Messwerten der Eindringtiefe.

2. Laserschweißverfahren nach Anspruch 1, wobei in dem Korrigieren der Bestrahlungsposition des Messstrahls (S) die Bestrahlungsposition des Messstrahls (S) korrigiert wird, um sich zu einer hinteren Seite einer Mitte der optischen Achse des Laserstrahls (L) in einer Schweißrichtung zu bewegen.

3. Laserschweißverfahren nach Anspruch 1 oder 2, wobei
   in dem Korrigieren der Bestrahlungsposition eine Parallelplatte, die auf einem optischen Weg des Messstrahls (S) eingerichtet ist, gedreht wird, um die Bestrahlungsposition des Messstrahls (S) zu korrigieren.

4. Laserschweißgerät (10) zum Schweißen einer Schweißportion (35) durch Verwenden eines Laserstrahls (L), wobei das Laserschweißgerät (10) umfasst:

   eine Bestrahlungseinheit (20), die den Laserstrahl (L) und einen Messstrahl (S), der koxial auf den Laserstrahl (L) ausgerichtet ist, auf die Schweißportion (35) abstrahlt, wobei der Messstrahl (S) eine Wellenlänge aufweist, die sich von einer Wellenlänge des Laserstrahls (L) unterscheidet;
   eine Messeinheit (14), die eine Eindringtiefe der Schweißportion (35) gemäß dem Messstrahl (S), der auf der Schweißportion (35) während des Laserschweißens reflektiert wird, misst;
   **gekennzeichnet durch**
   eine Bestimmungseinheit (17), die eine Richtung einer Abweichung einer optischen Achse, in der eine optische Achse des Messstrahls (S) von dem Laserstrahl (L) abweicht, durch relatives Vergleichen von mehreren Messwerten der Eindringtiefe bestimmt;
   eine Bestrahlungspositionskorrekturvorrichtung, die eine Bestrahlungsposition des Messstrahls (S) korrigiert, so dass die Bestrahlungsposition sich in einen vorbestimmten Bereich bewegt, der an einer optischen Achse des Laserstrahls (L) zentriert ist, und
   eine Bestrahlungspositionsjustiervorrichtung, die die Bestrahlungsposition des Messstrahls (S) während des Laserschweißens korrigiert, so dass die Bestrahlungsposition des Messstrahls (S) sich um ein Drehzentrum bewegt, das sich auf einem vorbestimmten Schweißweg bewegt.

## Revendications

1. Procédé de soudage au laser destiné à souder une partie à souder (35) à l'aide d'un faisceau laser (L), le procédé comprenant :

   l'émission, vers la partie à souder (35), du faisceau laser (L) et d'un faisceau de mesure (S) aligné de manière coaxiale avec le faisceau laser (L), le faisceau de mesure (S) ayant une longueur d'onde différente d'une longueur d'onde du faisceau laser (L) ;
   la mesure d'une profondeur de pénétration de la partie à souder (35) selon le faisceau de mesure (S) réfléchi sur la partie à souder (35) pendant le soudage au laser ;
   **caractérisé par** une correction d'une position d'irradiation du faisceau de mesure (S) de sorte que la position d'irradiation se déplace vers une zone prédéterminée centrée au niveau d'un axe optique du faisceau laser (L), en ajustant la position d'irradiation du faisceau de mesure (S) pendant le soudage au laser de sorte que la position d'irradiation du faisceau de mesure (S) se déplace autour d'un centre de rotation qui se déplace sur un trajet de soudage prédéterminé ; et
   la détermination d'une direction de déviation d'axe optique dans laquelle un axe optique du faisceau de mesure (S) dévie du faisceau laser (L), en comparant de manière relative une pluralité de valeurs mesurées de la profondeur de pénétration.

2. Procédé de soudage au laser selon la revendication 1, dans lequel

lors de la correction de la position d'irradiation du faisceau de mesure (S), la position d'irradiation du faisceau de mesure (S) est corrigée de façon à être déplacée vers un côté arrière, dans une direction de soudage, d'un centre de l'axe optique du faisceau laser (L).

3. Procédé de soudage au laser selon la revendication 1 ou 2, dans lequel

lors de la correction de la position d'irradiation, une plaque parallèle prévue sur un trajet optique du faisceau de mesure (S) est pivotée afin de corriger la position d'irradiation du faisceau de mesure (S).

4. Dispositif de soudage au laser (10) destiné à souder une partie à souder (35) à l'aide d'un faisceau laser (L), le dispositif de soudage au laser (10) comprenant :

une unité d'irradiation (20) qui émet, vers la partie à souder (35), le faisceau laser (L) et un faisceau de mesure (S) aligné de manière coaxiale avec le faisceau laser (L), le faisceau de mesure (S) ayant une longueur d'onde différente d'une longueur d'onde du faisceau laser (L) ;
une unité de mesure (14) qui mesure une profondeur de pénétration de la partie à souder (35) selon le faisceau de mesure (S) réfléchi sur la partie à souder (35) pendant le soudage au laser ;
**caractérisé en ce qu'**une unité de détermination (17) qui détermine une direction de déviation d'axe optique dans laquelle un axe optique du faisceau de mesure (S) dévie du faisceau laser (L), en comparant de manière relative une pluralité de valeurs mesurées de la profondeur de pénétration ;
un correcteur de position d'irradiation qui corrige une position d'irradiation du faisceau de mesure (S) de sorte que la position d'irradiation se déplace vers une zone prédéterminée centrée au niveau d'un axe optique du faisceau laser (L), et
un ajusteur de position d'irradiation qui ajuste la position d'irradiation du faisceau de mesure (S) pendant le soudage au laser de sorte que la position d'irradiation du faisceau de mesure (S) se déplace autour d'un centre de rotation qui se déplace sur un trajet de soudage prédéterminé.

# FIG.1

10

11

19

LASER
OSCILLATOR

19

18

CONTROLLER

16

20

DETERMINATION
UNIT

17

31

(S)

L

35

32   30

12

OPTICAL
INTERFEROMETER

MEASUREMENT
BEAM
OSCILLATOR

13

MEASUREMENT
UNIT

14

# FIG.2

# FIG.3

L
(S)

WELDING
DIRECTION →

31    38    36    35    37

37a

32    30

# FIG.4

# FIG.5

# FIG.6

# FIG.7

# FIG.8A

(WAVELENGTH $\lambda 1$)

# FIG.8B

(WAVELENGTH $\lambda 2$)

## FIG.8C

# FIG.9

# FIG.10

WELDING
DIRECTION

45°

L

S

# FIG.11

WELDING
DIRECTION

45°

L

S

40

# FIG.12

WELDING
DIRECTION

40

45°

41

L

S

# FIG.13

START

S101 — EMIT LASER BEAM AND MEASUREMENT BEAM COAXIALLY

S102 — MEASURE PENETRATION DEPTH WHILE MOVING ALONG CIRCULAR WELDING PATH

S103 — IS THERE VARIATION IN MEASURED VALUE?

NO

YES

S104 — DETERMINE OPTICAL AXIS DEVIATION DIRECTION

DETERMINE NO OPTICAL AXIS DEVIATION — S105

S106 — CORRECT OPTICAL AXIS DEVIATION

END

# FIG.14

# FIG.15

DEEP PORTION

SHALLOW PORTION     35          30

31

32

**EP 3 778 100 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016039045 A
- US 2016356595 A
- WO 2014132503 A
- JP 2012236196 A